# EUROPEAN PATENT SPECIFICATION

(11) **EP 0 521 541 B1**
(45) Date of publication and mention of the grant of the patent: **09.08.1995**
(21) Application number: 92201370.1
(22) Date of filing: 14.05.1992
(51) Int. Cl.: B65G 11/20, B65G 47/88, B65G 1/08

(54) **Chute with retarding means**
Rutsche mit Bremsmittel
Colonne de descente munie de moyens de retardement

(30) Priority: 05.07.1991 NL 9101171
(43) Date of publication of application: 07.01.1993
(73) Proprietor: VANDERLANDE INDUSTRIES NEDERLAND B.V., NL-5466 RB Veghel (NL)
(72) Inventor: Van den Goor, Jakobus Marie, NL-5641 WG Eindhoven (NL)
(74) Representative: Vollebregt, Cornelis Jacobus, Ir.

(56) References cited:
- DE-A- 3 500 206
- DE-B- 1 123 975
- DE-B- 1 135 365
- GB-A- 839 287
- US-A- 4 130 193
- US-A- 4 274 527
- PATENT ABSTRACTS OF JAPAN vol. 10, no. 18 (M-448)(2075)

## Description

The invention relates to a conveyor provided with an inclined conveyor track having a bearing surface along which objects can move downwards under the action of gravity.

In particular for the internal transport of objects use is e.g. made of more or less complicated conveyors, by means of which randomly supplied objects can each be led to a certain selected discharge station. In many cases a conveyor track, functioning as the end portion of the conveyor, is thereby arranged near each discharge station, said conveyor track having a bearing surface, along which objects can slide downwards under the action of gravity. At the bottom end of said conveyor track the objects are taken off manually or by mechanical means, e.g. so as to be forwarded to users or the like. In many cases there is a possibility of some objects piling up near the bottom end of the conveyor track. Thereby it is often a problem that such objects differ from each other as regards size, weight, strength and the like, with the consequent risk that a heavy object sliding down the conveyor track will bump against a vulnerable object already present near the bottom end of the conveyor track, in such a manner that damage is caused.

The object of the invention is to obtain a conveyor, and more in particular a conveyor track of the above kind, wherein the above-described drawback can be simply overcome while maintaining a simple construction of the conveyor track.

According to the invention this can be achieved in that said bearing surface has a waved profile, when seen in section, such that the bearing surface has peaks and valleys extending in the longitudinal direction of the conveyor track, whilst in the valleys means are located which can be moved upwards from a position where said means lie in the valleys into a position in which said means project above said peaks.

By using the construction according to the invention the movement of an object along the bearing surface can be controlled by simple means in such a manner that e.g. the occurence of undesirably high velocities of the objects is avoided.

It is noted that from DE-A-1,135,365 and US-A-4,130,193 there are known conveyors having means for interrupting the flow of products on the conveyor, said means extending transverse to the longitudinal direction of the conveyor.

In Patent Abstracts of Japan vol. 10, no. 18 (17-448) (2075) 24-1-1986 there is shown a flow chute having a multiplicity of longitudinal grooves for the measurement and the sorting of granular material.

The invention will be explained in more detail hereafter with reference to an embodiment of the construction according to the invention diagrammatically illustrated in the accompanying figures.

Figure 1 shows an embodiment of the construction according to the invention.

Figure 2 shows a larger-scale view of the encircled detail VI of figure 1.

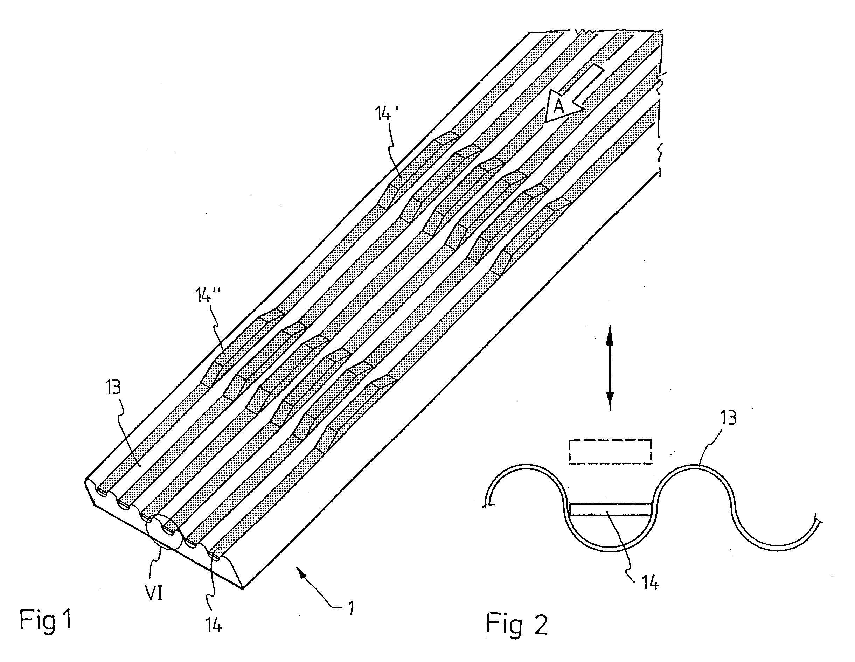

Figure 1 diagrammatically illustrates a conveyor track or chute 1, which may form part of a conveyor and which may be arranged in such a manner thereby, that objects to be displaced can move downwards across the conveyor track 1 under the action of gravity, in the direction according to the arrow A. Of course guide means may be provided at the side of the conveyor track or chute, so as to prevent the objects in question from falling sideways from the conveyor track 1.

The conveyor 1 includes a wavy bearing surface 13 of the conveyor track, with peaks and valleys extending in the longitudinal direction of the conveyor track. Strips 14, which are made of a flexible material and which extend in the longitudinal direction of the load-bearing surface 13, are placed in the valleys of said load-bearing surface. If desired said strips can be moved upwards by lifting means (not shown) at regularly spaced locations, so that the parts 14' and 14'' respectively project above the peaks of the bearing surface 13, so as to be able to slow down arriving objects in this manner.

## Claims

1. A conveyor provided with an inclined conveyor track having a bearing surface along which objects can move downwards under the action of gravity, characterized in that said bearing surface has a waved profile, when seen in section, such that the bearing surface has peaks and valleys extending in the longitudinal direction of the conveyor track, whilst in the valleys means are located which can be moved upwards from a position where said means lie in the valleys into a position in which said means project above said peaks.

2. A conveyor according to claim 1, characterized in that said means are formed by flexible strips located in the valleys and extending in the longitudinal direction of the conveyor track, which strips can be moved up and down locally.

## Patentansprüche

1. Eine Fördereinrichtung mit einer geneigten Förderbahn mit einer Lauffläche entlang derer Gegenstände unter Einwirkung der Schwerkraft abwärts bewegt werden können, dadurch gekennzeichnet, daß die Lauffläche im Querschnitt ein gewelltes Profil aufweist, so daß die Lauffläche Hügel und Täler besitzt, die sich in Längsrichtung der Förderbahn erstrecken, wobei in den Tälern Mittel die aufwärts bewegbar sind, ausgehend von einer Position, in der diese Mittel in den Tälern liegen, in eine Position, in der diese Mittel über die Hügel vorspringen, angeordnet sind.

2. Eine Fördereinrichtung nach Anspruch 1, dadurch gekennzeichnet, daß die Mittel gebildet sind durch flexible Streifen, die in den Tälern angeordnet sind und sich in Längsrichtung der Förderbahn erstrecken, wobei diese Streifen örtlich auf- und abwärts bewegt werden können.

## Revendications

1. Convoyeur comportant une piste de transport inclinée qui présente une surface porteuse le long de laquelle des objets peuvent se déplacer vers le bas sous l'effet de la pesanteur, caractérisé en ce que la dite surface porteuse a un profil ondulé, vue en coupe, de sorte que la surface porteuse présente des crêtes et des creux s étendant dans la direction longitudinale de la piste de transport tandis que, dans les creux, sont placés des moyens qui peuvent être déplacés vers le haut à partir d'une position dans laquelle lesdits moyens se trouvent dans les creux jusqu'à une position dans laquelle lesdits moyens font saillie au-dessus desdites crêtes.

2. Convoyeur suivant la revendication 1, caractérisé en ce que lesdits moyens sont constitués par des bandes flexibles placées dans les creux et s'étendant dans la direction longitudinale de la piste de transport, ces bandes pouvant être localement déplacées vers le haut et le bas.
